# EUROPÄISCHE PATENTSCHRIFT

(11) **EP 3 080 950 B1**
(45) Veröffentlichungstag und Bekanntmachung des Hinweises auf die Patenterteilung: **12.02.2020**
(21) Anmeldenummer: 15714480.9
(22) Anmeldetag: 01.04.2015
(51) Int. Cl.: H04L 12/24, H04L 12/40, H04W 76/11

(54) **VERFAHREN UND SYSTEM ZUR DETERMINISTISCHEN AUTOKONFIGURATION EINES GERÄTES**
METHOD AND SYSTEM FOR DETERMINISTIC AUTO-CONFIGURATION OF A DEVICE
PROCÉDÉ ET SYSTÈME D'AUTO-CONFIGURATION DÉTERMINISTE D'UN APPAREIL

(30) Priorität: 11.04.2014 DE 102014206989
(43) Veröffentlichungstag der Anmeldung: 19.10.2016
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2015/057207
(87) Internationale Veröffentlichungsnummer: WO 2015/155093

(56) Entgegenhaltungen:
- DE-A1-102010 033 230
- US-A1- 2010 205 281

## Beschreibung

Die Erfindung bezieht sich auf eine Vorrichtung und ein Verfahren zur deterministischen Autokonfiguration eines Gerätes beim Verbinden mit einer Vorrichtung.

Eine automatische Konfiguration eines Gerätes beim Verbinden mit einem anderen Gerät oder eine Vorrichtung, die auch als Plug-and-Play-Funktionalität bezeichnet wird, ist bei Computern, die beispielsweise durch zusätzliche interne oder externe Komponenten, wie beispielsweise einer Speichererweiterung, Festplatte oder eine Computermaus ergänzt werden, bekannt. Auch eine automatische Konfiguration von Geräten über ein IP-basiertes Netzwerk ist beispielsweise unter der Bezeichnung Universal Plug-and-Play bekannt. Die Autokonfiguration bzw. Plug-and-Play-Funktionalität spielt aber auch in Automatisierungssystemen eine wesentliche Rolle. Durch Auto-konfiguration von Feld- und Steuerungsgeräten kann ein Automatisierungssystem einfach eingerichtet werden. Die DE 10 2010 063 437 A1 beschreibt beispielsweise ein Verfahren zur Konfiguration eines oder mehrerer Geräte in einem Ethernetbasierten Kommunikationsnetz, mit dem auf einfache Weise eine ortsabhängige automatische Konfiguration der Geräte ermöglicht wird.

DE 10 2010 033 230 A1 beschreibt ein Verfahren und einen Server zum Einbinden eines Gerätes in ein Netzwerk, wobei eine erste Geräte-Identifizierung des Gerätes durch ein Lesegerät erfasst wird und die erfasste erste Geräte-Identifizierung als Konfigurationsdaten in einen zugriffsgeschützten Konfigurationsdatenspeicher des Netzwerkes übermittelt wird. Nach Anschließen des einzubindenden Gerätes an einen Zugangsknoten des Netzwerkes, wobei sich das Gerät gegenüber einem Server des Netzwerkes mittels einer zweiten Geräteidentifizierung identifiziert, erfolgt ein automatisches Konfigurieren des angeschlossenen Gerätes für das Netzwerk durch den Server, sofern zu der zweiten Geräte-Identifizierung des an dem Zugangsknoten des Netzwerkes angeschlossenen Gerätes bereits eine zugehörige erste Geräte-Identifizierung des Gerätes in dem zugriffsgeschützten Konfigurationsdatenspeicher des Netzwerkes gespeichert ist.

US 2010/0205281 A1 beschreibt ein Verfahren zum Verwalten eines Netzwerks, das Unterhalten einer Datenbank von Netzwerckonfigurationsprofilen, wobei jedes Netzwerkkonfigurationsprofil zu einem Netzwerkgerätetyp und einem physikalischen Ort relativ zu dem Netzwerk korrespondiert, Bestimmen eines physikalischen Ortes mit einem Netzwerkgerät relativ zu dem Netzwerk, nachdem das Netzwerkgerät erstmalig mit dem Netzwerk verbunden wurde, und Bestimmen eines Netzwerkkonfigurationsprofils umfasst, mit welchem das Netzwerkgerät basierend auf dem physikalischen Ort und dem Netzwerkgerätetyp aus der Datenbank konfiguriert wird.

Es besteht andererseits jedoch die Anforderung, dass beispielsweise ein Automatisierungssystem oder auch ein Zugsteuerungs-und Zugkommunikationssystem zuverlässig funktioniert. Dafür wäre eine feste Konfiguration vorteilhaft. Auch kann regulativ gefordert sein, dass im regulären Betrieb nur eine bestimmte, abgenommene Konfiguration verwendet wird.

Um die Anforderungen eines stabilen Netzbetriebes mit funktionierenden oder auch freigegebenen Konfigurationen für Geräte zu nutzen, die nur temporär an einer Vorrichtung angesteckt oder mit dieser verbunden sind und mehrmals eventuell auch an unterschiedlichen Vorrichtungen angesteckt werden sollen, sind die bisherigen Autokonfigurationsverfahren nicht geeignet. Beispielsweise wird in manchen Betriebssystemen wie beispielsweise Windows 7 oder einer Firmware, wie beispielsweise dem BIOS, eine nicht flüchtige Datenbank für erweiterte Systemkonfigurationsdaten (ESCD) verwendet, die Plug-and-Play-Konfigurationen speichert. Diese ESCD Datenbank wird von dem Betriebssystem verwendet, um Ressourcen und Konfigurationsdaten für Geräte, wie Erweiterungskomponenten, zu allokieren. Das Betriebssystem aktualisiert eine solche Konfigurationsdatenbank immer dann, wenn die Hardware-Konfiguration sich ändert, nachdem eine neue Zuordnung von Ressourcen ermittelt wird. Somit ist bei einem temporären Abstecken und späteren erneuten Verbinden des Gerätes mit der Vorrichtung eine automatische Konfiguration des Gerätes nicht sichergestellt, dass das Gerät mit der gleichen, vorher verwendeten Konfiguration angebunden wird.

Es ist somit die Aufgabe der vorliegenden Erfindung, die Flexibilität einer Auto-Konfigurationsfunktion, beispielsweise für eine Anwendung in einer Automatisierungsumgebung so anzupassen, dass ein stabiler Betrieb gewährleistet wird.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren zur deterministischen Autokonfiguration eines Gerätes beim Verbinden mit einer Vorrichtung umfasst als ersten Schritt ein Erzeugen einer gerätespezifischen Konfigurationsdatenstruktur bei einem erstmaligen Verbinden des Geräts mit der Vorrichtung, wobei diese Konfigurationsdatenstruktur die Konfigurationsdaten des Gerätes und der Vorrichtung, die bei einem erstmaligen Verbinden des Gerätes mit der Vorrichtung ermittelt wurden, identifiziert. Der nächste Schritt ist das Abspeichern der Konfigurationsstruktur im Gerät und/oder in der Vorrichtung. Bei einem erneuten Verbinden des Gerätes mit der Vorrichtung werden dann die erstmaligen Konfigurationsdaten des Gerätes und der Vorrichtung anhand der Konfigurationsdatenstruktur ermittelt und das Gerät und die Vorrichtung entsprechend den erstmaligen Konfigurationsdaten eingerichtet.

Ein erstmaliges Verbinden ist dadurch gekennzeichnet, dass eine der Vorrichtung bzw. dem Gerät zuordenbare Konfigurationsdatenstruktur nicht vorliegt. Ein erstmaliges Verbinden im Sinne der Erfindung kann also z.B. auch dann vorliegen, wenn eine gespeicherte Konfigurationsdatenstruktur gelöscht wurde bzw. als ungültig markiert wurde, oder wenn bislang nur Verbindungen hergestellt wurden, bei denen keine Konfigurationsdatenstruktur erzeugt und gespeichert wurde.

Dies ermöglicht es, ein Gerät bzw. die Vorrichtung, in die das Gerät eingesteckt bzw. mit dem das Gerät verbunden wird, in gleicher Weise zu konfigurieren, wie dies bei einem erstmaligen Verbinden des Gerätes mit der Vorrichtung der Fall war. Somit kann ein Gerät flexibel eingesetzt werden und bei Wiederverbinden mit der Vorrichtung seine vormalige Konfiguration einfach reproduziert werden.

In einer vorteilhaften Ausführungsform wird eine fest vorgegebene Geräte-Identifikationsinformation, die vom Gerät zumindest beim erstmaligen Verbinden zur Identifikation des Gerätes an die Vorrichtung übermittelt wird, in die Konfigurationsdatenstruktur aufgenommen und die erstmaligen Konfigurationsdaten des Gerätes und der Vorrichtung anhand der Geräte-Identifikationsinformation ermittelt.

Dies ermöglicht es, auf dem Gerät selbst keinerlei Information über die erstmaligen Konfigurationsdaten oder auch nur die Konfigurationsdatenstruktur abzuspeichern. Bei einem erneuten Verbinden des Gerätes mit der Vorrichtung und der Übermittlung der Geräte-Identifikationsinformation vom Gerät an die Vorrichtung können die erstmaligen Konfigurationsdaten anhand dieser Geräte-Identifikationsinformation in der Vorrichtung lung der Geräte-Identifikationsinformation vom Gerät an die Vorrichtung können die erstmaligen Konfigurationsdaten anhand dieser Geräte-Identifikationsinformation in der Vorrichtung identifiziert werden und an das Gerät übermittelt werden. Das Gerät kann somit eine einfach strukturierte Komponente, beispielsweise ein Sensor in einem Automatisierungsnetz, sein, die keine Speicherkapazität zum Abspeichern einer Konfigurationsdatenstruktur oder der erstmaligen Konfigurationsdaten selbst benötigt. Es wird lediglich Speicherkapazität in der Vorrichtung für die Konfigurationsdatenstruktur und erstmalige Konfigurationsdaten benötigt.

In einer weiteren Ausführungsform umfasst die Konfigurationsdatenstruktur eine Konfigurationskennung, die bei einem erstmaligen Verbinden des Gerätes mit der Vorrichtung ermittelt wird.

Wird diese Konfigurationsdatenstruktur beispielsweise im Gerät und in der Vorrichtung abgespeichert, so kann bei einem erneuten Verbinden des Gerätes mit der Vorrichtung das Gerät die Konfigurationskennung an die Vorrichtung übermitteln und über die Konfigurationskennung die dazugehörenden erstmaligen Konfigurationsdaten in der Vorrichtung ermitteln. Diese Konfigurationsdaten werden dann an das Gerät übertragen und das Gerät sowie eventuell auch die Vorrichtung entsprechend diesen Konfigurationsdaten konfiguriert. Dies ermöglicht eine einfach strukturierte Suchtabelle in der Vorrichtung und somit eine in kurzer Zeit durchführbare Autokonfiguration des Gerätes und der Vorrichtung. Somit kann eine gleiche Konfigurationskennung für verschiedene Geräte mit beispielsweise unterschiedlichen Geräte-Identifikationsinformationen verwendet werden, da bei einem erneuten Verbinden des Gerätes mit der Vorrichtung die Konfigurationsdaten durch die Konfigurationskennung identifiziert werden und nicht beispielsweise durch die Geräte-Identifikationsinformation selbst.

In einer vorteilhaften Ausführungsform umfasst die Konfigurationsdatenstruktur die Konfigurationsdaten des Gerätes und der Vorrichtung.

Dabei muss bei einem erneuten Verbinden des Gerätes mit der Vorrichtung lediglich überprüft werden, ob im Gerät sowie in der Vorrichtung die gleiche Konfigurationsdatenstruktur vorliegt. Ein Übertragen der Konfigurationsdaten selbst ist nicht notwendig, da diese ja bereits in der Konfigurationsdatenstruktur enthalten sind. Das Gerät sowie die Vorrichtung können selbstständig die entsprechende Konfiguration implementieren.

In einer weiteren vorteilhaften Ausführungsform umfasst die Konfigurationsdatenstruktur einen Hashwert der Konfigurationsdaten und das Einrichten des Gerätes und der Vorrichtung mit den reaktivierten Konfigurationsdaten wird lediglich dann ausgeführt, wenn der Hashwert der reaktivierten Konfigurationsdaten mit dem Hashwert in der Konfigurationsdatenstruktur übereinstimmt.

Damit ist eine Änderung oder Manipulation der Konfigurationsdaten im Gerät und/oder in der Vorrichtung erkennbar und ein Implementieren einer veränderten oder manipulierten Konfiguration kann somit erkannt und verhindert werden.

In einer vorteilhaften Ausführungsform werden die Konfigurationsdaten erst nach einem erfolgreichen Test der Konfiguration gespeichert.

Dadurch ist sowohl beim erstmaligen als auch bei jedem nachfolgenden Verbinden des Geräts mit der Vorrichtung ein funktionieren der Konfiguration sichergestellt.

In einer vorteilhaften Ausführungsform umfasst die Konfigurationsdatenstruktur eine Information über den Gerätetyp des Gerätes.

Bei einem Verbinden eines anderen Gerätes des gleichen Gerätetyps mit der Vorrichtung kann das andere Gerät automatisch entsprechend den Konfigurationsdaten einer bereits vorhandenen Konfigurationsdatenstruktur für den gleichen Gerätetyp konfiguriert werden. Damit kann beispielsweise bei einem Gerätetausch oder Komponententausch eine Übernahme der Daten des vorherigen typgleichen Gerätes automatisch durchgeführt werden. Damit kann beispielsweise ein einfacher Ersatzteilwechsel mit anschließender Autokonfiguration entsprechend dem ausgetauschten vorherigen Gerät durchgeführt werden.

In einer vorteilhaften Ausführungsform umfasst die Konfigurationsdatenstruktur eine Information über eine vorbestimmte Anlagenkonfigurations-Version und es wird lediglich ein Verbinden von Gerät und Vorrichtung mit der gleichen Anlagenkonfigurationskennung zugelassen.

Damit kann sichergestellt werden, dass lediglich eine Auto-konfiguration zwischen Geräten bzw. Vorrichtungen mit identischem Konfigurationsstand durchgeführt werden. Damit können nicht beliebige Geräte miteinander zusammengeschaltet werden.

In einer vorteilhaften Ausführungsform wird die Konfigurationsdatenstruktur erst nach einem erfolgreichen Funktionstest und/oder nach einem erfolgreichen Vergleich der Geräte-Identifikationsinformation und/oder Konfigurationsdaten mit vorher konfigurierten Daten und/oder nach einer Bestätigung durch einen Administrator abgespeichert.

Bei einer Aufnahme der Konfigurationsdatenstruktur nach einem erfolgreichen Funktionstest wird erreicht, dass bei jedem Wiederanstecken zuverlässig eine identische Konfiguration reaktiviert wird. Wird erst nach einem erfolgreichen Vergleich der Geräte-Identifikationsinformation und/oder der Konfigurationsdaten mit vorher konfigurierten Daten die Konfigurationsdatenstruktur gespeichert, so können an die Kennungen Sicherheitsregeln geknüpft werden, die für eine Autokonfiguration vorliegen müssen. Die Bestätigung eines Administrators kann beispielsweise sicherstellen, dass bislang noch nicht verbundene Geräte nur in einer speziellen Betriebsart, beispielsweise in einem Wartungsmodus der Anlage mit einer Vorrichtung verbunden werden können.

In einer vorteilhaften Ausführungsform können für ein Gerät weitere Konfigurationsdatenstrukturen mit weiteren zugehörigen Konfigurationsdaten ermittelt und gespeichert werden.

Dies ermöglicht es, für eine Geräte/Vorrichtungs-Kombination unterschiedliche Konfigurationen zuzulassen. Dabei können diese unterschiedlichen Konfigurationen abhängig von weiteren Parametern ausgewählt werden, wie beispielsweise unterschiedlichen Anlagekonfigurationskennungen, so dass ein Gerät mit einer Vorrichtung in verschiedenen Anlagekonfigurationen zusammenarbeiten kann.

In einer vorteilhaften Ausführungsform kann ein Gerät lediglich mit der erstmaligen Konfigurationsdatenstruktur und dem zugehörigen Konfigurationsdaten konfiguriert werden.

In einer vorteilhaften Ausführungsform weist die Konfigurationsdatenstruktur eine zeitliche Gültigkeitsdauer auf, die von dem Gerät und/oder von der Vorrichtung vorgegeben wird.

In einer vorteilhaften Ausführungsform wird die Konfigurationsdatenstruktur nach Ablauf einer Gültigkeitsdauer als gestoppt gekennzeichnet oder gelöscht.

In einer vorteilhaften Ausführungsform weist die Konfigurationsdatenstruktur eine räumliche Gültigkeitsdauer auf und ein erneutes Verbinden des Gerätes mit der Vorrichtung ist lediglich in dem geografischen Gebiet, das der räumlichen Gültigkeitsangabe entspricht, möglich.

In einer vorteilhaften Ausführungsform wird die Konfigurationsdatenstruktur zur Authentisierung und/oder Autorisierung des Gerätes bzw. der Vorrichtung in einer nachfolgenden Kommunikationsverbindung verwendet.

Durch die Konfigurationsdatenstruktur wird genau die Geräte/Vorrichtungs-Kombination gekennzeichnet und authentisiert werden.

In einer weiteren vorteilhaften Ausführungsform wird die Konfigurationsdatenstruktur bei einer Schlüsselaushandlung in einer nachfolgenden Kommunikationsverbindung des Gerätes bzw. der Vorrichtung verwendet.

Das erfindungsgemäße System zur deterministischen Autokonfiguration eines Gerätes beim Verbinden mit einer Vorrichtung umfasst mindestens ein Gerät und mindestens eine Vorrichtung, wobei das Gerät und die Vorrichtung derart ausgebildet sind, eine gerätespezifische Konfigurationsdatenstruktur bei einem erstmaligen Verbinden des Geräts mit der Vorrichtung zu erzeugen, wobei diese Konfigurationsdatenstruktur die Konfigurationsdaten des Gerätes und der Vorrichtung, die bei einem erstmaligen Verbinden des Gerätes mit der Vorrichtung ermittelt wurden, identifiziert. Des Weiteren sind das Gerät und die Vorrichtung derart ausgebildet, die Konfigurationsdatenstruktur im Gerät und/oder in der Konfiguration abzuspeichern und bei einem erneuten Verbinden des Gerätes mit der Vorrichtung die erstmaligen Konfigurationsdaten des Gerätes und der Vorrichtung anhand der Konfigurationsdatenstruktur zu ermitteln und das Gerät und die Vorrichtung entsprechend den reaktivierten erstmaligen Konfigurationsdaten einzurichten.

Die Konfigurationsdatenstruktur umfasst dabei die Konfigurationsdaten des Geräts und der Vorrichtung.

Somit kann insbesondere eine funktionierende und getestete Konfiguration bei einem erneuten Verbinden des Gerätes mit der Vorrichtung wieder hergestellt werden und somit das ordnungsgemäße Funktionieren der Vorrichtung mit dem Gerät sicherstellen.

In einer vorteilhaften Ausführungsform des Systems ist das Gerät ein in eine Vorrichtung ansteckbare interne Komponente der Vorrichtung, oder das Gerät ist eine ansteckbare Peripheriekomponente einer Vorrichtung, oder das Gerät ist eine Netzkomponente oder eine Applikation auf einer Netzwerkkomponente, die mit der Vorrichtung, die ein Kommunikationsnetzwerk mit Netzwerkkomponenten und/oder Steuerungseinheiten ist, verbunden wird.

Des Weiteren werden ein Gerät und eine Vorrichtung beansprucht, die derart ausgebildet sind, das Verfahren gemäß den Ansprüchen 1 bis 16 auszuführen. Des Weiteren wird ein Computerprogrammprodukt mit Programmbefehlen zur Durchführung des Verfahrens beansprucht.

Ausführungsbeispiele des erfindungsgemäßen Systems der erfindungsgemäßen Vorrichtung und des erfindungsgemäßen Gerätes sowie des erfindungsgemäßen Verfahrens sind in den Zeichnungen beispielhaft dargestellt und werden anhand der nachfolgenden Beschreibung näher erläutert. Es zeigen:
- Figur 1: ein erstes Ausführungsbeispiel eines erfindungsgemäßen Systems in schematischer Darstellung;
- Figur 2: ein zweites Ausführungsbeispiel eines erfindungsgemäßen Systems mit zusätzlichen Servern zur Bestimmung von Konfigurationsdaten in schematischer Darstellung;
- Figur 3: ein Ausführungsbeispiel einer erfindungsgemäßen Konfigurationsdatenstruktur in schematischer Darstellung; und
- Figur 4: ein Ausführungsbeispiel des erfindungsgemäßen Verfahrens als Ablaufdiagramm.

Einander entsprechende Teile sind in allen Figuren mit den gleichen Bezugszeichen versehen.

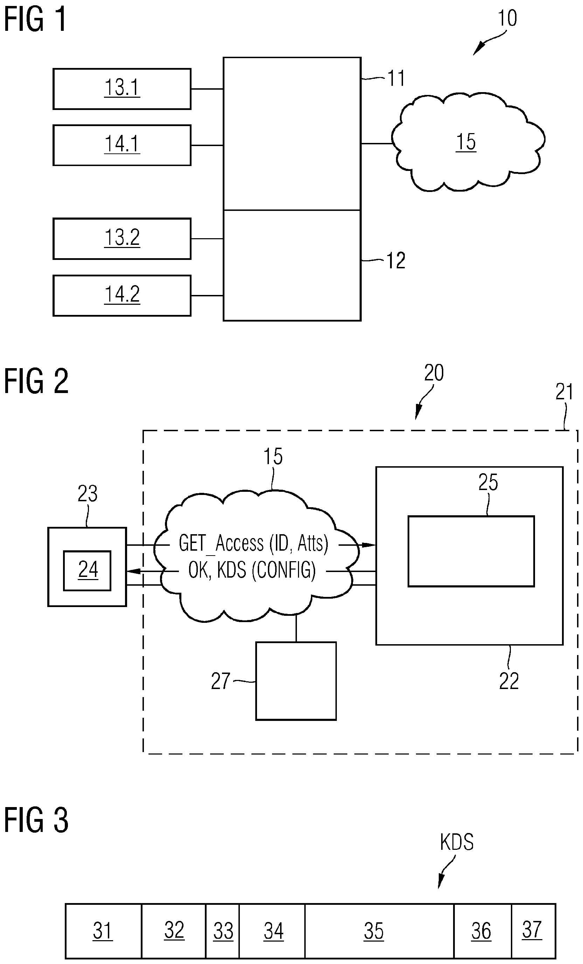

Anhand von Figur 1 und 2 werden unterschiedliche Systeme aufgezeigt, in denen eine Autokonfiguration eines Gerätes beim Verbinden mit einer Vorrichtung stattfindet. Die Bezeichnung "Verbinden" und "Anstecken" werden im Weiteren als Synonyme verwendet.

Das System 10 umfasst verschiedene externe Geräte 13.1, 13.4, die beispielsweise als ansteckbare Peripheriekomponenten an eine Vorrichtung 11 angesteckt werden können. Des Weiteren ist ein Gerät 12, beispielsweise eine Erweiterungskarte als ansteckbare interne Komponente, mit der Vorrichtung 11 verbunden. Die Vorrichtung 11 kann beispielsweise ein Steuergerät innerhalb einer Automatisierungsanlage sein. Diese ist mit einem Automatisierungsnetzwerk, hier mit dem Kommunikationsnetzwerk 15, verbunden. An die Vorrichtung 11, d.h. das Steuergerät, können mittels Auto-Konfiguration Sensoren und/oder Aktoren, hier beispielsweise die Geräte 13.1, 13.4, angeschlossen werden. Auch kann ein Erweiterungsmodul, hier Gerät 12, beispielsweise ein Ein-/Ausgabemodul über Auto-Konfiguration mit der Vorrichtung 11, d.h. mit dem Steuergerät, verbunden werden. An das Erweiterungsmodul 12 können wiederum Sensoren und/oder Aktoren 13.2, 14.2 angesteckt werden. In diesem Fall hat das Erweiterungsmodul 12 die Rolle einer Vorrichtung, mit der Geräte 13.2, 14.2 verbunden werden.

Damit die Vorrichtung 11, 12 mit den verbundenen Geräten 13.1, 14.1 bzw. 13.2, 14.2 zusammenarbeiten kann, müssen die Geräte 13.1, 14.1 sowie die Vorrichtung 11 entsprechend konfiguriert werden, d.h. es müssen beispielsweise Kommunikationsparameter zwischen der Vorrichtung 11 und den Geräten 13.1, 14.1, wie z.B. Portnummern oder Adressen, vereinbart werden. Des Weiteren können zur Ausführung bestimmter Aufgaben in Verbindung mit der Vorrichtung im Gerät 13.1, 14.1 bestimmte Steuerungsfunktionen aktiviert und somit konfiguriert werden. Entsprechend können auch Anpassungen in der Konfiguration der Vorrichtung 11 oder auch in weiteren beispielsweise über das Kommunikationsnetz 15 angeschlossenen Komponenten vorgenommen werden.

Bei einem erstmaligen Autokonfigurationsvorgang erfolgt ein Herstellen einer Verbindung zwischen einem Gerät und einer Vorrichtung, wobei das Gerät von der Vorrichtung identifiziert wird und davon abhängig die Vorrichtung eine Konfiguration bestimmt und diese Konfiguration dem Gerät mitteilt und aktiviert, um das Gerät zu nutzen. Dies ist in Figur 2 am Beispiel eines Gerätes 23, das in ein verteiltes System 20, beispielsweise einem Automatisierungsnetzwerk verbunden wird, dargestellt. Als Vorrichtung 21 ist dabei das Kommunikationsnetzwerk 15 mit Netzkomponenten und/oder Steuerungseinheiten, wie bspw. ein Konfigurationsserver 22 oder ein Kontextserver 27 zu verstehen. Nachdem das Gerät 23 über ein Kommunikationsnetzwerk 15 an die Vorrichtung 21 angebunden wurde, nimmt das Gerät 23 Kontakt mit beispielsweise dem Konfigurationsserver 22 auf, überträgt Geräte-Identifikationsinformation ID und eventuell weitere Attribute Atts an den Server 22. Eine Auto-Konfigurationseinheit 25 im Konfigurationsserver 22 prüft, beispielsweise anhand einer Sicherheitsrichtlinie, ob das Gerät 23 an die Vorrichtung 21 angeschlossen werden darf. Des Weiteren kann der Server 22 durch Abfrage eines Kontextservers 27 prüfen, ob beispielsweise im aktuellen Betriebszustand des Systems eine Einbindung des Gerätes 23 an die Vorrichtung 21 erlaubt ist. Ist dies der Fall, ermittelt beispielsweise eine Konfigurationseinheit 25 die Konfigurationsdaten CONFIG für das Gerät 23 sowie eine gerätespezifische Konfigurationsdatenstruktur KDS und sendet diese über das Kommunikationsnetzwerk 15 an das Gerät 23. Der Nachrichtenaustausch ist in Figur 2 durch die Pfeile symbolisiert.

Anschließend wird das Gerät 23 entsprechend den empfangenen Konfigurationsdaten CONFIG konfiguriert. Die Konfigurationsdatenstruktur KDS wird dabei entweder im Gerät 23, beispielsweise in einem dafür vorgesehenen Speicher 24 oder in der Vorrichtung 21, beispielsweise in der Konfigurationseinheit 25 im Konfigurationsserver 22 oder in beiden abgespeichert.

Wird nun das Gerät 23 von der Vorrichtung 21 getrennt und zu einem späteren Zeitpunkt erneut mit der Vorrichtung 21 verbunden, so werden die erstmaligen Konfigurationsdaten CONFIG des Gerätes 23 und der Vorrichtung 21 anhand der Konfigurationsdatenstruktur KDS ermittelt und das Gerät 23 und die Vorrichtung 21 entsprechend der reaktivierten erstmaligen Konfigurationsdaten eingerichtet. Die Konfigurationsdaten können dabei auch weitere Netzwerkkomponenten betreffen, die bei einem Verbinden des Gerätes 23 mit der Vorrichtung 21 angepasst werden müssen. Diese Konfigurationsdaten werden den entsprechenden anderen Netzwerkkomponenten mitgeteilt.

Entscheidend bei einem erneuten Verbinden des Gerätes 23 mit der Vorrichtung 21 ist es, dass die gleichen Konfigurationsdaten wie beim erstmaligen Verbinden des Gerätes 23 mit der Vorrichtung 21 wieder verwendet werden. Die Konfigurationsdatenstruktur KDS identifiziert dabei diese erstmalige Konfiguration bzw. die entsprechenden Konfigurationsdaten.

Um ein funktionsfähiges System 10, 20 zu garantieren, werden in einem Ausführungsbeispiel nur solche erstmaligen Konfigurationsdaten und eine zugehörige Konfigurationsdatenstruktur KDS gespeichert, wenn die entsprechende Konfiguration des Gerätes bzw. der Vorrichtung vorher erfolgreich getestet wurde.

Die Konfigurationsdatenstruktur KDS, wie beispielsweise in Figur 3 dargestellt, kann dabei unterschiedliche Information bzw. Parameter umfassen und entsprechend der enthaltenen Parameter bzw. Information entweder im Gerät 23 oder in der Vorrichtung oder in beiden abgespeichert sein. In Figur 3 ist beispielhaft eine Konfigurationsdatenstruktur KDS dargestellt. Die Konfigurationsdatenstruktur KDS umfasst mindestens einen oder auch eine Kombination der gezeigten Parameter bzw. Information.

In einem ersten Ausführungsbeispiel werden beim erstmaligen Verbinden des Gerätes 23 mit der Vorrichtung 21 beispielsweise in dem Konfigurationsserver 22 in Figur 2, die Konfigurationsdaten für das Gerät bzw. die Vorrichtung 21 ermittelt. Es wird des Weiteren eine Konfigurationsdatenstruktur KDS erzeugt, die beispielsweise die Geräte-Identifikationsinformation 31 des Gerätes 23 umfasst. Die ermittelten Konfigurationsdaten werden nun gekennzeichnet durch die Konfigurationsdatenstruktur KDS beispielsweise in einer Konfigurationseinheit 25 des Konfigurationsserver 22 abgelegt. Bei einem erneuten Verbinden des Gerätes 23 mit der Vorrichtung 21 sendet das Gerät 23 die Geräte-Identifikationsinformation 31 an die Vorrichtung 21. Die Vorrichtung 21 ermittelt daraufhin die Konfigurationsdatenstruktur KDS mit der entsprechenden Geräte-Identifikationsinformation 31 und die dazu abgespeicherten Konfigurationsdaten. Diese werden an das Gerät 23 übermittelt und dort das Gerät entsprechend eingerichtet.

Zusätzlich kann in der Konfigurationsdatenstruktur KDS ein Hashwert 34, der aus den erstmaligen Konfigurationsdaten gebildet wurde, enthalten sein. In diesem Fall reaktiviert das Gerät 23 die erstmaligen Konfigurationsdaten nur dann, wenn ein vom Gerät 23 über die von der Vorrichtung 21 gelieferten Konfigurationsdaten gebildeter Hashwert mit dem Hashwert 34 in der Konfigurationsdatenstruktur übereinstimmt. Somit wird eine Änderung der von der Vorrichtung gesandten Konfigurationsdaten gegenüber den erstmaligen Konfigurationsdaten erkannt und eine Implementierung verhindert.

Die Konfigurationsdatenstruktur KDS kann auch eine Konfigurationskennung 32 enthalten. Anstatt der Geräte-Identifizierungsinformation 31 kann diese Konfigurationskennung 32 bei einem erneuten Verbinden vom Gerät 23 an die Vorrichtung 21 übermittelt werden. In diesem Fall sind auch in der Vorrichtung 21 die erstmaligen Konfigurationsdaten des Gerätes 23 mit dieser Konfigurationskennung 32 identifizierbar und entsprechend abgelegt.

Die Konfigurationsdatenstruktur KDS kann zusätzlich Information zum Gerätetyp 33 des Gerätes 23 umfassen. Sendet das Gerät 23 diese Konfigurationsdatenstruktur KDS beim erneuten Verbinden an die Vorrichtung 21, so kann beispielsweise abhängig von einer eingerichteten Sicherheitsrichtlinie im System 22 eine Übernahme von Konfigurationsdaten des gleichen Gerätetyps erfolgen. Dies ermöglicht beispielsweise den Austausch von gleichen Geräten bzw. von Ersatzteilen, die entsprechend dem vorherigen Gerät konfiguriert werden. Liefert das Gerät 23 eine Information zum Gerätetyp 33, für die keine erstmaligen Konfigurationsdaten in der Vorrichtung 21 vorhanden sind, so wird eine Fehlermeldung oder ein Alarm ausgegeben.

Die Konfigurationsdatenstruktur KDS kann weitere Information, wie beispielsweise eine Anlagenkonfigurationskennung 36 umfassen. Diese wird dazu genutzt, nur eine Autokonfiguration von Gerät und Vorrichtung mit einem bestimmten und/oder mit einem identischer Anlagen-Konfigurationsstand, der durch eine gleiche Anlagenkonfigurationskennung 36 ausgedrückt wird, durchzuführen. Somit wird sichergestellt, dass lediglich Geräte mit beispielsweise der gleichen Konfigurations-Version bzw. mit dem gleichen Konfigurationsstand in einer Anlage verwendet werden.

Die Konfigurationsdatenstruktur KDS kann weitere Parameter 37, beispielsweise eine zeitliche Gültigkeitsdauer oder eine räumliche Gültigkeitsangabe umfassen. Die zeitliche Gültigkeitsdauer kann vom Gerät 23 und/oder von der Vorrichtung 21 vorgegeben werden. Nach Ablauf der Gültigkeitsdauer wird die Konfigurationsdatenstruktur KDS als gesperrt gekennzeichnet oder gelöscht. Damit ist ein späteres ungewolltes Reaktivieren der Konfigurationsdaten beim Verbinden des Gerätes mit der Vorrichtung nicht mehr möglich. Somit wird ebenfalls verhindert, dass Geräte 23 mit veralteter Konfiguration konfigurierte und neu in ein System eingebracht werden.

Durch die räumliche Gültigkeitsangabe ist die Durchführung einer Autokonfiguration mit den gespeicherten erstmaligen Konfigurationsdaten nur dann erneut zugelassen, wenn die Konfiguration des Geräts in einer vorbestimmten räumlichen Umgebung stattfindet, beispielsweise in derselben Umgebung, wie bei der erstmaligen Konfiguration, bei der die Konfigurationsdatenstruktur KDS bzw. die dazugehörigen erstmaligen Konfigurationsdaten angelegt wurden.

Eine Konfigurationsdatenstruktur KDS kann aber auch die Konfigurationsdaten selbst bzw. eine Beschreibung der Konfigurationsdaten 35 enthalten. Wird eine solche Konfigurationsdatenstruktur KDS mit einer Beschreibung der Konfigurationsdaten 35 bei einem erstmaligen Verbinden des Gerätes 23 mit der Vorrichtung 21 erzeugt und sowohl im Gerät als auch in der Vorrichtung abgelegt, ist bei einem späteren erneuten Verbinden des Gerätes 23 mit der Vorrichtung 21 lediglich beispielsweise durch Senden eines der Parameter der Konfigurationsdatenstruktur KDS vom Gerät 23 an die Vorrichtung 21 und eine Bestätigung dieses Parameters der Konfigurationsdatenstruktur durch die Vorrichtung 21 notwendig. Daraufhin kann das Gerät 23 eigenständig die Konfigurationsdaten 35 aus der Konfigurationsdatenstruktur KDS entnehmen und implementieren. In gleicher Weise kann dies die Vorrichtung 21 auf ihrer Seite tun. Dadurch wird die Menge der zu übertragenden Daten reduziert, weniger Bandbreite benötigt und eine Manipulation der Konfigurationsdaten auf dem Übertragungsweg verhindert.

Ist im Gegensatz dazu im Konfigurationsdatenstruktur KDS lediglich die Geräte-Identifikationsinformation 31 enthalten und in der Vorrichtung eine Verknüpfung der Geräte-Identifikationsinformation 31 mit den erstmaligen Konfigurationsdaten, so können auch sehr einfach strukturierte Geräte 23 eine deterministische Autokonfiguration durchführen, da lediglich die Geräte-Identifikationsinformation 31 auf dem Gerät gespeichert werden muss, nicht aber sonstige Konfigurationsdaten. Diese werden von der Vorrichtung 21 an das Gerät 23 übermittelt.

In einer Ausführungsform wird die Konfigurationsdatenstruktur KDS in dem Gerät 23 und/oder in der Vorrichtung 21 erst nach einem erfolgreichen Funktionstest abgespeichert. Dies stellt sicher, dass bei jedem Wiederanstecken des Gerätes 23 an die Vorrichtung 21 zuverlässig eine identische Konfiguration reaktiviert wird. Die Konfigurationsdatenstruktur KDS kann aber auch erst nach einem erfolgreichen Vergleich der Geräte-Identifikationsinformation 31 und/oder der Konfigurationsdaten mit vorher festgelegten Daten beispielsweise aus Planungsdaten bzw. einer vorher festgelegten Systemkonfiguration übereinstimmen. Das Abspeichern der Konfigurationsdatenstruktur KDS kann aber auch erst erfolgen, wenn diese durch einen Administrator bestätigt wird. Somit kann beispielsweise erreicht werden, dass nur in einer speziellen Betriebsart ein noch nicht verwendetes Gerät verbunden und benutzt wird.

Geräte 13, 14, 23, können weitere Konfigurationsdatenstrukturen KDS mit weiteren zugehörigen Konfigurationsdaten ermitteln und speichern. Solche Geräte 13, 14, 23, können beispielsweise verschiedene Konfigurationsdatenstrukturen zum Verbinden mit unterschiedlichen Vorrichtungen 11, 12 umfassen. Es kann ein Gerät aber auch mehrere Konfigurationsdatenstrukturen zum erneuten Verbinden mit der gleichen Vorrichtung 11 aufweisen, die beispielsweise zu unterschiedlichen Anlagenkonfigurations-Versionen gehören. Somit kann eine Autokonfiguration für verschiedene Anlagenkonfigurations-Versionen vorgehalten werden.

Andererseits gibt es Geräte die ausschließlich mit der erstmaligen Konfigurationsdatenstruktur und den zugehörigen Konfigurationsdaten bei einem erneuten Verbinden mit der Vorrichtung reaktiviert werden können. Dabei wird eine Änderung der Konfiguration nach dem erstmaligen Verbinden des Gerätes 13, 14, 23 mit der Vorrichtung 11, 12, 21 nicht zugelassen.

In einer Variante kann eine Konfigurationsdatenstruktur KDS in der Authentisierungsphase einer nachfolgenden Kommunikationsverbindung genutzt werden. Dazu wird die Konfigurationsdatenstruktur KDS bei der Geräteauthentifizierung als Parameter oder als ein Attributzertifikat mitgeschickt. Bei der Verwendung der Konfigurationsdatenstruktur bei einer Authorisierung kann sichergestellt werden, dass das Gerät nur in einer bestimmten Konfiguration eine Kommunikationsverbindung aufbauen darf und dies auch in der Gegenstelle also beim Kommunikationspartner überprüft werden kann.

Die Konfigurationsdatenstruktur KDS kann auch in der Schlüsselaushandlungsphase einer nachfolgenden Kommunikationsverbindung verwendet werden. Damit kann sichergestellt werden, dass beispielsweise ein Sitzungsschlüssel an eine bestehende Konfiguration gebunden ist und nicht versehentlich vom Gerät bei einem Wechsel der Konfiguration genutzt werden kann. Dies ist insbesondere dann von Vorteil, wenn sich zwischen zwei Autokonfigurationsaktionen die Konfiguration eines Gerätes geändert hat.

Die Vorrichtung 21, wie auch die Vorrichtungen 11 und 12 sind so ausgebildet, dass die beschriebenen Funktionen und Verfahren darauf ausführbar sind. Gleiches gilt für die beschriebenen Geräte 12, 13, 14, 23, sowie die Systeme 10 und 20.

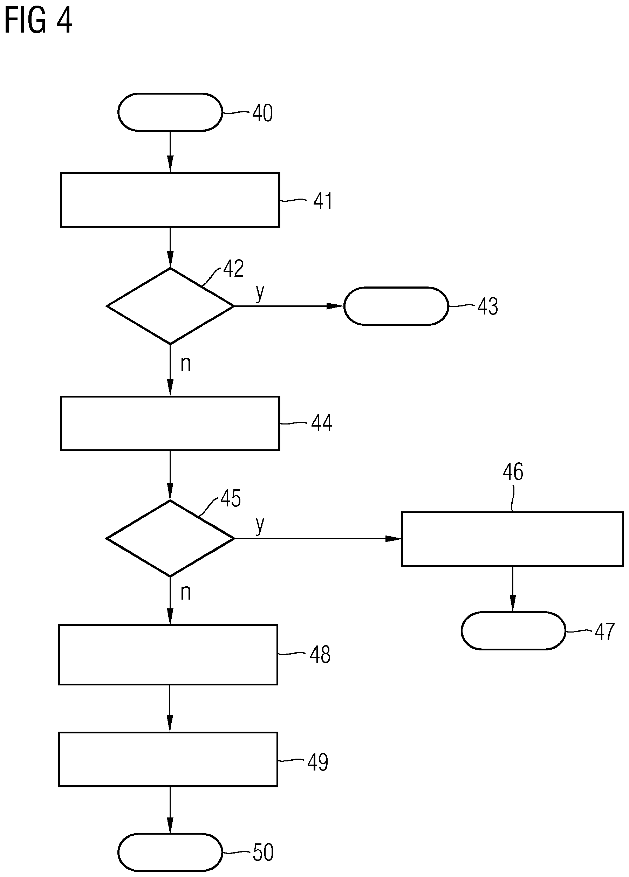

In Figur 4 wird ein Ablauf einer deterministischen Autokonfiguration anhand eines Ablaufdiagramms dargestellt. Im Schritt 40 beginnt der Autokonfigurationsprozess, indem ein Gerät 12, 13, 14, 23 an eine Vorrichtung 11, 12, 21 angesteckt bzw. mit ihr verbunden wird. Als erstes werden im Schritt 41 beispielsweise Identifizierungsdaten des angesteckten Gerätes an die Vorrichtung 11, 12, 21 übermittelt und dort entsprechend beispielsweise einer Sicherheitsrichtlinie geprüft. Wird im Schritt 42 eine Abweichung des Gerätes von der Sicherheitsrichtlinie festgestellt, so wird beispielsweise eine Fehlermeldung im Schritt 43 ausgegeben und keine Konfiguration durchgeführt.

Wird keine Abweichung im Schritt 42 festgestellt, wird im Gerät 13, 14, 23, und/oder in der Vorrichtung 11, 12, 21 geprüft, ob eine Konfigurationsdatenstruktur KDS im lokalen Speicher vorhanden ist, siehe Schritt 44. Ergibt sich im Schritt 45, dass noch keine Konfigurationsdatenstruktur KDS vorhanden ist, wird entsprechend einem der vorbenannten Beispiele eine Konfigurationsdatenstruktur KDS erzeugt und abgespeichert, siehe Schritt 48. Im Schritt 49 wird die Konfiguration im Gerät und der Vorrichtung eingerichtet. Im Schritt 50 ist damit der Auto-Konfigurationsprozess abgeschlossen. Nachfolgend kann das Gerät 13, 14, 23, in seiner ermittelten Konfiguration mit der Vorrichtung 11, 12, 21 zusammenarbeiten.

Wird das Gerät 13, 14, 23, von der Vorrichtung 11, 12, 21 getrennt bzw. abgesteckt, so beginnt bei einem erneuten Anstecken des Gerätes 13, 14, 23, an die Vorrichtung 11, 12, 21 das beschriebene Verfahren wieder mit Schritt 40.

Sind die Identifikationsdaten, die im Schritt 41 an die Vorrichtung übermittelt werden, bereits Teil der Konfigurationsdatenstruktur KDS, so entspricht Schritt 41 dem Schritt 44 und es kann nachfolgend der Prozess direkt mit Schritt 46, nämlich dem Lesen der Konfigurationsdatenstruktur KDS und dem Reaktivieren der erstmaligen Konfigurationsdaten weitergeführt werden.

Somit wird einerseits die Flexibilität einer Autokonfiguration beispielsweise für Anwendungen in einer Automatisierungsumgebung genutzt und dabei ein stabiler Betrieb einer Automatisierungsanlage durch die bereits geprüften erstmaligen Konfigurationsdaten gewährleistet.

Alle beschriebenen und/oder gezeichneten Merkmale können im Rahmen der Erfindung vorteilhaft miteinander kombiniert werden.

## Patentansprüche

1. Verfahren zur deterministischen Autokonfiguration eines Gerätes (13, 14, 23) beim Verbinden mit einer Vorrichtung (11, 21) mit den Schritten:
- bei einem erstmaligen Verbinden des Geräts (13, 14, 23) mit der Vorrichtung (11, 21) Erzeugen einer gerätespezifischen Konfigurationsdatenstruktur (KDS), wobei diese Konfigurationsdatenstruktur (KDS) die Konfigurationsdaten des Geräts (13, 14, 23) und der Vorrichtung (11, 21), die beim erstmaligen Verbinden des Geräts (13, 14, 23) mit der Vorrichtung (11, 21) ermittelt wurden, identifiziert, und Abspeichern der Konfigurationsdatenstruktur (KDS) im Gerät (13, 14, 23) und/oder in der Vorrichtung (11, 21), und
- bei einem erneuten Verbinden des Geräts (13, 14, 23) mit der Vorrichtung (11, 21) Ermitteln der erstmaligen Konfigurationsdaten des Geräts und der Vorrichtung anhand der Konfigurationsdatenstruktur (KDS) und Einrichten des Geräts (13, 14, 23) und der Vorrichtung (11, 21) entsprechend den erstmaligen Konfigurationsdaten,
wobei die Konfigurationsdatenstruktur (KDS) die Konfigurationsdaten (35) des Geräts (13, 14, 23) und der Vorrichtung (11, 21) umfasst.

2. Verfahren nach Anspruch 1, wobei eine fest vorgegebene Geräte-Identifikationsinformation (31), die vom Gerät (13, 14, 23) zumindest beim erstmaligen Verbinden zur Identifikation des Geräts (13, 14, 23) an die Vorrichtung (11, 21) übermittelt wird, in die Konfigurationsdatenstruktur (KDS) aufgenommen wird und die erstmaligen Konfigurationsdaten des Geräts und der Vorrichtung anhand der Geräte-Identifikationsinformation (31) ermittelt werden.

3. Verfahren nach Anspruch 1 oder 2, wobei die Konfigurationsdatenstruktur (KDS) eine Konfigurationskennung (32) umfasst, die bei einem erstmaligen Verbinden des Geräts (13, 14, 23) mit der Vorrichtung (11, 21) ermittelt wird.

4. Verfahren nach einem der Ansprüche 1 bis 3, wobei die Konfigurationsdatenstruktur (KDS) einen Hashwert (34) der Konfigurationsdaten umfasst und das Einrichten des Geräts (13, 14, 23) und der Vorrichtung (11, 21) mit den reaktivierten Konfigurationsdaten lediglich dann ausgeführt wird, wenn der Hashwert der reaktivierten Konfigurationsdaten mit dem Hashwert (34) in der Konfigurationsdatenstruktur (KDS) übereinstimmt.

5. Verfahren nach einem der Ansprüche 1 bis 4, wobei Konfigurationsdaten erst nach einem erfolgreichen Test der Konfiguration gespeichert werden.

6. Verfahren nach einem der Ansprüche 1 bis 5, wobei die Konfigurationsdatenstruktur (KDS) eine Information über den Gerätetyp (33) des Geräts (13, 14, 23) umfasst.

7. Verfahren nach einem der Ansprüche 1 bis 6, wobei die Konfigurationsdatenstruktur (KDS) eine Anlagenkonfigurationskennung (36) umfasst, und lediglich ein Verbinden eines Geräts (13, 14, 23) mit einer Vorrichtung (11, 21) einer bestimmten und/oder der gleichen Anlagenkonfigurationskennung (36) zugelassen wird.

8. Verfahren einem der Ansprüche 1 bis 7, wobei die Konfigurationsdatenstruktur (KDS) in dem Gerät (13, 14, 23) und/oder in der Vorrichtung (11, 21) erst nach einem erfolgreichen Funktionstest und/oder einem erfolgreichen Vergleich der Geräte-Identifikationsinformation (31) und/oder nach einem erfolgreichen Vergleich der Konfigurationsdaten (35) mit vorher festgelegten Daten und/oder nach einer Bestätigung durch einen Administrator abgespeichert wird.

9. Verfahren nach einem der Ansprüche 1 bis 8, wobei für ein Gerät (13, 14, 23) weitere Konfigurationsdatenstrukturen mit weiteren zugehörigen Konfigurationsdaten ermittelt und gespeichert werden können.

10. Verfahren nach einem der Ansprüche 1 bis 8, wobei ein Gerät (13, 14, 23) lediglich mit der erstmaligen Konfigurationsdatenstruktur (KDS) und den zugehörigen Konfigurationsdaten bei einem erneuten Verbinden mit der Vorrichtung (11, 21) konfiguriert werden kann.

11. Verfahren nach einem der Ansprüche 1 bis 10, wobei die Konfigurationsdatenstruktur (KDS) eine zeitliche Gültigkeitsdauer aufweist, die vom Gerät (13, 14, 23) und/oder von der Vorrichtung (11, 21) vorgegeben wird.

12. Verfahren nach Anspruch 11, wobei die Konfigurationsdatenstruktur (KDS) nach Ablauf der Gültigkeitsdauer als gesperrt gekennzeichnet oder gelöscht wird.

13. Verfahren nach einem der Ansprüche 1 bis 12, wobei die Konfigurationsdatenstruktur (KDS) eine räumliche Gültigkeitsangabe aufweist und ein erneutes Verbinden des Geräts (13, 14, 23) mit der Vorrichtung (11, 21) lediglich in dem geographischen Gebiet, das der räumlichen Gültigkeitsangabe entspricht, möglich ist.

14. Verfahren nach einem der Ansprüche 1 bis 13, wobei die Konfigurationsdatenstruktur (KDS) zur Authentisierung und/oder Autorisierung des Geräts (13, 14, 23) bzw. der Vorrichtung (11, 21) in einer nachfolgenden Kommunikationsverbindung verwendet wird.

15. Verfahren nach einem der Ansprüche 1 bis 14, wobei die Konfigurationsdatenstruktur (KDS) bei einer Schlüsselaushandlung in einer nachfolgenden Kommunikationsverbindung des Geräts (13, 14, 23) bzw. der Vorrichtung (11, 21) verwendet wird.

16. System zur deterministischen Autokonfiguration eines Gerätes (13, 14, 23) beim Verbinden mit einer Vorrichtung (11, 21) umfassend mindestens ein Gerät (13, 14, 23) und mindestens eine Vorrichtung(11, 21), wobei das Gerät (13, 14, 23) und die Vorrichtung (11, 21) derart ausgebildet sind:
- eine gerätespezifische Konfigurationsdatenstruktur (KDS) bei einem erstmaligen Verbinden des Geräts (13, 14, 23) mit der Vorrichtung (11, 21) zu erzeugen, wobei diese Konfigurationsdatenstruktur (KDS) die Konfigurationsdaten des Geräts (13, 14, 23) und der Vorrichtung (11, 21), die bei dem erstmaligen Verbinden des Geräts (13, 14, 23) mit der Vorrichtung (11, 21) ermittelt wurden, identifiziert,
die Konfigurationsdatenstruktur (KDS) im Gerät (13, 14, 23) und/oder in der Vorrichtung (11, 21) abzuspeichern, und
- bei einem erneuten Verbinden des Geräts (13, 14, 23) mit der Vorrichtung (11, 21) die erstmaligen Konfigurationsdaten des Geräts (13, 14, 23) und der Vorrichtung (11, 21) anhand der Konfigurationsdatenstruktur (KDS) zu ermitteln und das Gerät (13, 14, 23) und die Vorrichtung (11, 21) entsprechend den reaktivierten erstmaligen Konfigurationsdaten einzurichten,
wobei die Konfigurationsdatenstruktur (KDS) die Konfigurationsdaten (35) des Geräts (13, 14, 23) und der Vorrichtung (11, 21) umfasst.

17. System nach Anspruch 16, wobei das Gerät (12) ein in eine Vorrichtung (11) ansteckbare interne Komponente der Vorrichtung (11) ist, oder das Gerät (13, 14) eine ansteckbare Peripheriekomponente einer Vorrichtung (11, 12) ist, oder das Gerät (23) eine Netzwerkkomponente oder eine Applikation auf einer Netzwerkkomponente ist, die mit der Vorrichtung (21), die ein Kommunikationsnetzwerk mit Netzwerkkomponenten und/oder Steuerungseinheiten ist, verbunden wird.

18. Gerät, das derart ausgebildet ist, das Verfahren gemäß den Ansprüchen 1 bis 15 auszuführen.

19. Vorrichtung, die derart ausgebildet, ist das Verfahren gemäß den Ansprüchen 1 bis 15 auszuführen.

20. Computerprogrammprodukt mit Programmbefehlen zur Durchführung aller Verfahrensschritte nach einem der Ansprüche 1 bis 15.

## Claims

1. Method for the deterministic autoconfiguration of a device (13, 14, 23) in the course of connection to an apparatus (11, 21) with the steps:
- in the event of a first-time connection of the device (13, 14, 23) to the apparatus (11, 21), generation of a device-specific configuration data structure (KDS), wherein the said configuration data structure (KDS) identifies the configuration data of the device (13, 14, 23) and the apparatus (11, 21), which configuration data have been determined in the course of the first-time connection of the device (13, 14, 23) to the apparatus (11, 21), and storage of the configuration data structure (KDS) in the device (13, 14, 23) and/or in the apparatus (11, 21), and
- in the event of a renewed connection of the device (13, 14, 23) to the apparatus (11, 21), determination of the first-time configuration data of the device and the apparatus by means of the configuration data structure (KDS), and setting up of the device (13, 14, 23) and the apparatus (11, 21) in accordance with the first-time configuration data,
wherein the configuration data structure (KDS) comprises the configuration data (35) of the device (13, 14, 23) and the apparatus (11, 21).

2. Method in accordance with Claim 1, wherein fixedly prescribed device identification information (31), which is transmitted from the device (13, 14, 23) at least in the case of the first-time connection to the apparatus (11, 21) for the purposes of identifying the device (13, 14, 23), is recorded in the configuration data structure (KDS) and the first-time configuration data of the device and the apparatus are determined by means of the device identification information (31) .

3. Method in accordance with Claim 1 or 2, wherein the configuration data structure (KDS) comprises a configuration identifier (32), which is determined in the course of a first-time connection of the device (13, 14, 23) to the apparatus (11, 21).

4. Method in accordance with one of Claims 1 to 3, wherein the configuration data structure (KDS) comprises a hash value (34) of the configuration data, and the setting up of the device (13, 14, 23) and the apparatus (11, 21) with the reactivated configuration data is then solely executed if the hash value of the reactivated configuration data agrees with the hash value (34) in the configuration data structure (KDS).

5. Method in accordance with one of Claims 1 to 4, wherein configuration data are stored only after a successful test of the configuration.

6. Method in accordance with one of Claims 1 to 5, wherein the configuration data structure (KDS) comprises information concerning the type (33) of the device (13, 14, 23).

7. Method in accordance with one of Claims 1 to 6, wherein the configuration data structure (KDS) comprises a plant configuration identifier (36), and only a connection of a device (13, 14, 23) to an apparatus (11, 21) with a particular and/or the same plant configuration identifier (36) is authorized.

8. Method in accordance with one of Claims 1 to 7, wherein the configuration data structure (KDS) is stored in the device (13, 14, 23) and/or in the apparatus (11, 21) only after a successful function test, and/or after a successful comparison of the device identification information (31), and/or after a successful comparison of the configuration data (35) with previously established data, and/or after a confirmation by an administrator.

9. Method in accordance with one of Claims 1 to 8, wherein further configuration data structures with further related configuration data can be determined and stored for a device (13, 14, 23).

10. Method in accordance with one of Claims 1 to 8, wherein in the course of a renewed connection to the apparatus (11, 21) a device (13, 14, 23) can be configured solely with the first-time configuration data structure (KDS) and the related configuration data.

11. Method in accordance with one of Claims 1 to 10, wherein the configuration data structure (KDS) has a temporal period of validity, which is prescribed by the device (13, 14, 23) and/or by the apparatus (11, 21).

12. Method in accordance with Claim 11, wherein after the expiry of the period of validity the configuration data structure (KDS) is identified as blocked, or deleted.

13. Method in accordance with one of Claims 1 to 12, wherein the configuration data structure (KDS) has spatial validity data, and a renewed connection of the device (13, 14, 23) to the apparatus (11, 21) is only possible in the geographical region that corresponds to the spatial validity data.

14. Method in accordance with one of Claims 1 to 13, wherein the configuration data structure (KDS) is used for the purposes of authenticating and/or authorizing the device (13, 14, 23) and/or the apparatus (11, 21) in a subsequent communications connection.

15. Method in accordance with one of Claims 1 to 14, wherein the configuration data structure (KDS) is used in the course of a key exchange in a subsequent communications connection of the device (13, 14, 23) and/or the apparatus (11, 21).

16. System for the deterministic autoconfiguration of a device (13, 14, 23) in the course of the connection to an apparatus (11, 21), comprising at least one device (13, 14, 23) and at least one apparatus (11, 21), wherein the device (13, 14, 23) and the apparatus (11, 21) are designed so as to:
- generate a device-specific configuration data structure (KDS) in the event of a first-time connection of the device (13, 14, 23) to the apparatus (11, 21), wherein the said configuration data structure (KDS) identifies the configuration data of the device (13, 14, 23) and the apparatus (11, 21), which configuration data have been determined in the course of the first-time connection of the device (13, 14, 23) to the apparatus (11, 21), store the configuration data structure (KDS) in the device (13, 14, 23) and/or in the apparatus (11, 21), and
- in the event of a renewed connection of the device (13, 14 23) to the apparatus (11, 21), determine the first-time configuration data of the device (13, 14, 23) and the apparatus (11, 21) by means of the configuration data structure (KDS), and set up the device (13, 14 23) and the apparatus (11, 21) in accordance with the reactivated first-time configuration data,
wherein the configuration data structure (KDS) comprises the configuration data (35) of the device (13, 14, 23) and the apparatus (11, 21).

17. System in accordance with Claim 16, wherein the device (12) is an internal component of the apparatus (11) that can be plugged into an apparatus (11), or the device (13, 14) is a pluggable peripheral component of an apparatus (11, 12), or the device (23) is a network component, or an application on a network component, which is connected to the apparatus (21), which is a communications network with network components and/or control units.

18. Device that is designed so as to execute the method in accordance with Claims 1 to 15.

19. Apparatus that is designed so as to execute the method in accordance with Claims 1 to 15.

20. Computer program product with program commands for the purposes of executing all the method steps in accordance with one of Claims 1 to 15.

## Revendications

1. Procédé d'autoconfiguration déterministe d'un appareil (13, 14, 23) lors de la connexion à un dispositif (11, 21) comportant les étapes suivantes :
- lors d'une première connexion de l'appareil (13, 14, 23) au dispositif (11, 21), génération d'une structure de données de configuration (KDS) spécifique à l'appareil, cette structure de données de configuration (KDS) identifiant les données de configuration de l'appareil (13, 14, 23) et du dispositif (11, 21) qui ont été déterminées à la première connexion de l'appareil (13, 14, 23) au dispositif (11, 21), et sauvegarde de la structure de données de configuration (KDS) dans l'appareil (13, 14, 23) et/ou dans le dispositif (11, 21) et
- lors d'une nouvelle connexion de l'appareil (13, 14, 23) au dispositif (11, 21), détermination des premières données de configuration de l'appareil et du dispositif à l'aide de la structure de données de configuration (KDS) et configuration de l'appareil (13, 14, 23) et du dispositif (11, 21) conformément aux premières données de configuration,
la structure de données de configuration (KDS) incluant les données de configuration (35) de l'appareil (13, 14, 23) et du dispositif (11, 21).

2. Procédé selon la revendication 1, une information d'identification d'appareil fixée (31) qui est transmise de l'appareil (13, 14, 23) au dispositif (11, 21) au moins à la première connexion pour l'identification de l'appareil (13, 14, 23) étant intégrée à la structure de données de configuration (KDS) et les premières données de configuration de l'appareil et du dispositif étant déterminées à l'aide de l'information d'identification d'appareil (31).

3. Procédé selon la revendication 1 ou 2, la structure de données de configuration (KDS) comprenant un identifiant de configuration (32) qui est déterminé lors d'une première connexion de l'appareil (13, 14, 23) au dispositif (11, 21).

4. Procédé selon l'une des revendications 1 à 3, la structure de données de configuration (KDS) incluant une valeur de hachage (34) des données de configuration et la configuration de l'appareil (13, 14, 23) et du dispositif (11, 21) avec les données de configuration réactivées n'étant effectuée que si la valeur de hachage des données de configuration réactivées et la valeur de hachage (34) dans la structure de données de configuration (KDS) coïncident.

5. Procédé selon l'une des revendications 1 à 4, des données de configuration n'étant sauvegardées qu'après la réussite d'un test de la configuration.

6. Procédé selon l'une des revendications 1 à 5, la structure de données de configuration (KDS) incluant une information sur le type (33) de l'appareil (13, 14, 23).

7. Procédé selon l'une des revendications 1 à 6, la structure de données de configuration (KDS) incluant un identifiant de configuration d'installation (36) et seule étant autorisée une connexion d'un appareil (13, 14, 23) à un dispositif (11, 21) d'un identifiant de configuration d'installation (36) déterminé ou du même identifiant de configuration d'installation.

8. Procédé selon l'une des revendications 1 à 7, la structure de données de configuration (KDS) n'étant sauvegardée dans l'appareil (13, 14, 23) et/ou le dispositif (11, 21) qu'après un test de fonction réussi et/ou une comparaison réussie de l'information d'identification d'appareil (31) et/ou une comparaison réussie des données de configuration (35) avec des données préalablement fixées et/ou après une confirmation par un administrateur.

9. Procédé selon l'une des revendications 1 à 8, d'autres structures de données de configuration avec d'autres données de configuration associées pouvant être déterminées et sauvegardées pour un appareil (13, 14, 23).

10. Procédé selon l'une des revendications 1 à 8, un appareil (13, 14, 23) ne pouvant être configuré qu'avec la première structure de données de configuration (KDS) et les données de configuration associées lors d'une nouvelle connexion au dispositif (11, 21).

11. Procédé selon l'une des revendications 1 à 10, la structure de données de configuration (KDS) présentant une durée de validité temporelle qui est spécifiée par l'appareil (13, 14, 23) et/ou par le dispositif (11, 21).

12. Procédé selon la revendication 11, la structure de données de configuration (KDS) étant, à l'expiration de la durée de validité, marquée comme bloquée, ou supprimée.

13. Procédé selon l'une des revendications 1 à 12, la structure de données de configuration (KDS) présentant une mention de validité spatiale, et une nouvelle connexion de l'appareil (13, 14, 23) au dispositif (11, 21) n'étant possible que dans la zone géographique qui correspond à la mention de validité spatiale.

14. Procédé selon l'une des revendications 1 à 13, la structure de données de configuration (KDS) étant utilisée pour authentifier et/ou autoriser l'appareil (13, 14, 23) resp. le dispositif (11, 21) dans une liaison de communication suivante.

15. Procédé selon l'une des revendications 1 à 14, la structure de données de configuration (KDS) étant utilisée pour une négociation de clé dans une liaison de communication suivante de l'appareil (13, 14, 23) resp. du dispositif (11, 21) .

16. Système d'autoconfiguration déterministe d'un appareil (13, 14, 23) lors de la connexion à un dispositif (11, 21), comprenant au moins un appareil (13, 14, 23) et au moins un dispositif (11, 21), l'appareil (13, 14, 23) et le dispositif (11, 21) étant conçus de manière à :
générer une structure de données de configuration (KDS) spécifique à l'appareil lors d'une première connexion de l'appareil (13, 14, 23) au dispositif (11, 21), cette structure de données de configuration (KDS) identifiant les données de configuration de l'appareil (13, 14, 23) et du dispositif (11, 21) qui ont été déterminées lors de la première connexion de l'appareil (13, 14, 23) au dispositif (11, 21),
sauvegarder la structure de données de configuration (KDS) dans l'appareil (13, 14, 23) et/ou dans le dispositif (11, 21) et
lors d'une nouvelle connexion de l'appareil (13, 14, 23) au dispositif (11, 21), déterminer les premières données de configuration de l'appareil (13, 14, 23) et du dispositif (11, 21) à l'aide de la structure de données de configuration (KDS) et configurer l'appareil (13, 14, 23) et le dispositif (11, 21) conformément aux premières données de configuration réactivées,
la structure de données de configuration (KDS) incluant les données de configuration (35) de l'appareil (13,14, 23) et du dispositif (11,21).

17. Système selon la revendication 16, l'appareil (12) étant un composant interne du dispositif (11) enfichable dans un dispositif (11) ou l'appareil (13, 14) étant un composant périphérique enfichable d'un dispositif (11, 12) ou l'appareil (23) étant un composant de réseau ou une application sur un composant de réseau, qui sont reliés au dispositif (21) qui est un réseau de communication avec des composants de réseau et/ou des unités de commande.

18. Appareil conçu de manière à exécuter le procédé selon les revendications 1 à 15.

19. Dispositif conçu de manière à exécuter le procédé selon les revendications 1 à 15.

20. Produit de programme informatique avec des instructions de programme pour l'exécution de toutes les étapes du procédé selon l'une des revendications 1 à 15.
